# EUROPEAN PATENT APPLICATION

(11) **EP 1 724 861 A1**
(43) Date of publication of application: **22.11.2006**
(21) Application number: 05010606.1
(22) Date of filing: 17.05.2005
(51) Int. Cl.: H01M 4/86, H01M 4/88, H01M 4/96, H01M 8/02, H01M 8/08

(54) **Novel materials for alkaline electrolysers and alkaline fuel cells**

(71) Applicant: Abson, Nicholas M., 24510 Ste Alvere (FR)
(72) Inventor: Abson, Nicholas M., 24510 Ste Alvere (FR)

(57) **Abstract**

This invention describes the use of conducting porous graphite foam materials, graphite cloth and graphite paper as electrodes, catalyst supports, gas diffusion layers and other components in alkaline electrolysers, and alkaline (AFC) fuel cells. The porous open structure of the graphite material is ideally suited to vapour deposition of catalyst materials, and electrochemical deposition methods. Porous graphite foam can be made by the pyrolysis of pitch at high temperatures. Alternatively it can be made by the pyrolysis of certain polymer compounds which can create a foam structure during the curing process. Graphite cloth and graphite paper can be made by pyrolysis of carbon cloth and carbon paper at high temperatures. Although the exact microstructure of the final graphite material depends on many factors, they all possess key physical properties which are relevant to the invention described here such as high thermal conductivity and high electrical conductivity. Graphite foam can also be used in its powdered form as a conductive additive to gas diffusion layers, electrodes and bi-polar plates.

## Description

This invention describes the use of graphite materials as electrodes, active layers and as diffusion layers in electrolysers and fuel cells. The key properties of the graphite materials for the application are that they have good electronic conductivity, high connected porosity, and large surface area. In the case where the graphite materials are used as electrodes, then high catalytic activity is also necessary. The key components of the electrolyser and fuel cell are described first followed by a description of the invention and examples of its use in the alkaline electrolyser and alkaline fuel cell.

### Background to the invention

Electrolysers are used in many industrial processes and operate on the principles of electrochemistry. In particular, the electrolysis of water provides a means of producing very pure hydrogen and very pure oxygen. Water electrolysis is a standard production method for making hydrogen for fuel cells due to its high purity level. There are many similarities between electrolyser technology and fuel cell technology and the basic electrochemical reactions are simply reversed. However, there are differences in the construction and design between the two processes. In the case of electrolysers, the system is optimised for the maximum output of hydrogen (and oxygen) whereas the fuel cell is optimised for maximum power production. Even so, there are many commonalities and similarities in the components used, such as the electrolyte, the catalysts, the electrodes and so forth.

Fuel cells are electrochemical devices which convert chemical energy into electrical energy by means of an electrochemical reaction between the fuel and an oxidant such as air or pure oxygen. In a typical fuel cell, hydrogen is often used as fuel and air is used as the oxidant and both are supplied to the fuel cell as gases fed from storage reservoirs. In order for the electrochemical reactions to take place several key components are required. A single electrochemical cell comprises of two electrodes, namely the anode and the cathode, which are separated by an electrolyte. The anode forms the negative electrode and provides the surface on which the fuel (hydrogen) reacts. The cathode forms the positive electrode and provides the surface on which the oxidant (air) reacts. Generally a catalyst is required to accelerate the electrochemical reactions at both the anode and cathode. The electrolyte is the medium through which the ionic species generated by the electrochemical reactions at the electrodes are transported from one electrode to the other. This flux (current) of ions is exactly equivalent to the flux (current) of electrons produced by the cell at the terminals. The electrolyte may be either a liquid or a solid. In the case of the alkaline fuel cell, the electrolyte is a strong aqueous solution of potassium hydroxide. In the case of the proton exchange membrane fuel cells (PEM) the electrolyte is a solid polymer. However in both cases the electrolyte contains dissolved water. A working fuel cell consists of a stack of single cells connected together electrically. The type of connection depends upon the design. There are two basic concepts - mono-polar and bi-polar. In mono-polar designs, the cells are connected externally to the stack, while in the bi-polar design, the cells are connected internally using bi-polar interconnecting plates. Alkaline fuel cell systems have historically developed along the mono-polar route, but in this invention we are concerned principally with novel bi-polar designs.

In the fuel cell, the fuel (hydrogen) is supplied to the anode through a porous interface material called the gas diffusion layer (GDL). This layer is an integral part of the anode-electrode assembly and allows the gas to reach the active layer containing the catalyst where it reacts. Similarly, the air or oxidant is supplied to the cathode through a cathode gas diffusion layer.

Electrolysers are fuel cells in reverse. They produce pure hydrogen and oxygen by the electrolysis of water. An external voltage exceeding the open circuit voltage is applied from a power supply to the electrodes upon which water is decomposed. Hydrogen is produced on the cathode and oxygen is produced on the anode. The two gases are prevented from mixing either by the use of bi-polar plates or the use of a membrane diaphragm. Nickel is generally used as the electrode material, while the active electrochemical layer is generally made from a carbon supported catalyst which is applied to the nickel electrode. In bi-polar plate concepts, the gases generated on the electrodes are collected in channels incorporated in the bi-polar plates whence they flow into separation tanks. In the case of alkaline electrolysers the gases are separated from residual electrolyte (lye) in the separating tanks and the residual lye returned to the stack. The gases are then dried and stored in pressure vessels. Normally only the hydrogen is stored while the oxygen is vented to the atmosphere. A gas clean up stage is often added as a final step before storage, in which case absorption media are used to remove residual oxygen in the hydrogen outlet. It is common for alkaline electrolysers to run at high pressures, typically 15 bar.

The electrode assembly for fuel cells is made of three basic components as described here. The first component is the gas diffusion layer (GDL). The GDL has the function of allowing the fuel gas (hydrogen) or oxidant (air) to diffuse from its supply chamber to the catalyst surface where it adsorbs, exchanges electrons and reacts. In a bi-polar design the gases are fed through channels incorporated in the surface of the bi-polar plate, so the plate acts both as a gas distribution system and an electrical interconnect between cells. One side of the bi-polar plate supplies the fuel (hydrogen) while the other side of the plate supplies the air (oxidant). The gas diffusion layers are bonded to each side of the bi-polar plate, one comprising the anode the other comprising the cathode.

The gas diffusion layer (GDL) is normally made from a water repellent (hydrophobic) porous material. The purpose of making the gas diffusion layer water repellent is to prevent flooding of the electrode by water contained in the electrolyte, and especially water produced by the electrochemical reaction. In the case of the alkaline fuel cell, water is produced at the anode as a result of the reaction of the supplied hydrogen with the hydroxide ions contained in the electrolyte.

In the case of alkaline fuel cells of the mono-polar design, the gas diffusion layer can be made entirely out of a water repellent plastic cloth such as PTFE or Teflon, or alternatively a mixture of PTFE powder and a pore-former such as ammonium bicarbonate. In fuel cells of the bi-polar design, it is necessary for the gas diffusion layer to be made electronically conducting. This can be achieved by adding carbon or better still graphite to the PTFE /pore-former mix. This invention provides a novel way to make the gas diffusion layer.

The second component of the electrode assembly is the active layer (AL). This is normally a layer of material containing a catalyst, such as platinum supported on active carbon, and is usually applied or bonded to the side of the gas diffusion layer facing the electrolyte chamber. The active layer can be made by mixing the catalyst with PTFE and a pore former such as ammonium bicarbonate. It is necessary to impart electronic conductivity in the active layer as electrons are required in the electrochemical reactions talking place on the catalyst surfaces. This invention provides a novel way to make the active layer. In the case of the alkaline fuel cell, the active layer is normally applied or bonded directly onto the gas diffusion electrode. In order for the catalyst to function effectively it is very important that it is in intimate contact with the electrolyte, and simultaneously in contact with the reactant gas (hydrogen on the anode and oxygen on the cathode). In order to achieve this three phase contact zone, it is very important to prevent flooding of the electrode assembly with water. This is the reason for using water repellent materials in the construction of the gas diffusion layer.

The third component of the electrode assembly is the current collector. In the case of the alkaline fuel cell, it is common to use a nickel mesh as a current collector. In mono-polar designs this is usually embedded in the active layer, thus providing support for the electrode assembly as well as serving as the current collector.

The traditional methods for fabricating the electrode assembly use calendaring and rolling techniques combined with hot pressing and sintering. This invention provides a simpler and cheaper approach to cell fabrication. The electrode assembly for electrolysers is similar to fuel cells except that the gas diffusion layer provides a means for the evolved gases to be collected. In the case of alkaline electrolysers, a gas diffusion electrode is not normally required because the evolved gases can be collected in a separating tank.

### Description of the invention

We describe here the use of porous conducting graphite foam, graphite cloth and graphite paper as components in alkaline electrolysers and fuel cells. The components include electrodes, gas diffusion layers, active layers and diaphragms.

These components can be made in a variety of ways, but the main requirements for the invention described here are that they are porous and electrically conductive. The components can take the form of rigid sheets or flexible sheets. In the former case we can use graphite foam structures, and in the latter case we can consider graphitized carbon cloth or graphitized carbon paper. The use of graphite foam in alkaline fuel cells has been described in a previous patent application. In the application described herein, we extend the previous application to also include alkaline electrolysers. In the case of graphitized cloth and graphitized carbon paper, we consider their application in alkaline electrolysers and alkaline fuel cells. It is also possible to use the graphitized carbon foam, cloth and paper in any other type of fuel cell and electrolyser operating at temperatures up to the combustion temperature of graphite. Such fuel cells and electrolysers include PEM, DMFC, PAFC, PEM electrolysers and phosphoric acid electrolysers.

Graphite cloth can be made by graphitizing carbon cloth at high temperatures in excess of 2500 deg C. To prevent oxidation, the process can be carried out in an inert gas atmosphere. Any kind of carbon cloth can be used in the graphitization process, but especially those types that are commonly used to make electrodes for PEM fuel cells. An example of a carbon cloth is a woven fabric made from carbon thread. Another example is a woven fabric made from carbon fibres. In addition to graphite cloth, a variation of the invention uses graphite wool, and graphite felt.

Graphite paper can be made by graphitizing carbon cloth at high temperatures in excess of 2500 deg C. To prevent oxidation, the process can be carried out in an inert gas atmosphere. Any kind of carbon paper can be used in the graphitization process, but especially those types that are commonly used to make electrodes for PEM fuel cells.

Porous graphite foams can be made by the pyrolysis of pitch at high temperatures as described in several patents. Alternatively they can be made by the pyrolysis of certain polymer compounds which can create a foam structure during the curing process. Graphitization takes place at a very high temperature in excess of 2500 deg C. Although the exact microstructure of the final graphite foam depends on many factors, they all possess key physical properties which are relevant to the invention described here. These properties can be listed as follows: high thermal conductivity, high electrical conductivity, low mass (density), high porosity, good mechanical strength, good corrosion resistance, good thermal shock resistance, low thermal expansion coefficient, mechanical flexibility, mechanical compliance, ease of fabrication, ease of cutting, ease of machining, ease of handling etc.

Given these properties, porous graphite foam can be used to make electrodes for the alkaline electrolyser and other electrolysers such as the proton exchange membrane (PEM) electrolyser. In addition they can also be used in their powdered form as conductive additives to the gas diffusion layers, gas membrane separators (diaphragms) and bi-polar plates for electrolysers.

This invention describes the use of conducting porous graphite materials as electrodes, catalyst supports, gas diffusion layers and other components in alkaline electrolysers. The porous open structure of the graphite material can be coated with a catalytic or active layer by vapour deposition methods. Other coating techniques such as electroplating and electroless plating can also be used to provide a catalytic or active layer onto the graphite substrate.

### Example 1 Making electrodes for electrolysers from graphite foam

In this example a block of porous graphite foam is cut by conventional means into a sheet of thickness typically 1mm, but thinner or thicker electrodes can also be envisaged. The area of the sheet is similar to that of the overall dimension of the completed electrode assembly. The sheet is then incorporated into the electrode assembly where it functions as the electrode and active layer combined. In this example no additional active material is required. The high surface area of the graphite foam provides a large number of active sites for the electrochemical reactions to take place. In the case of electrolysers, these reactions will be hydrogen evolution on the cathode and oxygen evolution on the cathode. The electrodes made by this method can function as either anodes or cathodes.

### Example 2 Making electrodes (anode or cathode) for electrolysers from graphite foam incorporating an active layer

In this example a block of porous graphite foam is cut by conventional means into a sheet of thickness typically 1mm, but thinner or thicker electrodes can also be envisaged. The area of the sheet is similar to that of the overall dimension of the completed electrode assembly. The surfaces of the graphite foam are coated with an active catalytic material which increases the rate of electrochemical reactions on the electrodes. Methods used to apply a metallic catalyst layer to the surfaces of the foam include vacuum assisted vapour deposition, chemical vapour deposition, vapour deposition, evaporation, sputtering, electro-plating, electroless plating, spray coating, dip coating and any other technique that is commonly used to apply a metallic coating. Examples of catalytically active metals include silver, silver alloys, nickel, nickel alloys, cobalt, cobalt alloys, iron, iron alloys etc. The sheet is then incorporated into the electrode assembly where it functions as the electrode (anode or cathode). In a variation of the method, non-metallic catalysts such as perovskites can also be applied by vapour deposition methods including chemical vapour deposition and electrostatic assisted vapour deposition. Other coating methods such as sputtering, laser ablation, VPS, spray pyrolysis and dip coating can also be used to apply catalysts.

The high surface area of the catalytically coated graphite foam provides a large number of active sites for the electrochemical reactions to take place. In the case of electrolysers, then these reactions will be hydrogen evolution on the cathode and oxygen evolution on the anode. In the case of fuel cells, these reactions will be hydrogen oxidation on the anode and oxygen reduction on the cathode.

The sheet is then made into an electrode by coating the surfaces of the foam with a layer of catalytic material. In particular the method of vapour deposition can be used to apply layers of metal and other materials as catalysts. Metals have the advantage of being readily vaporised, either by high temperature evaporation or vacuum assisted evaporation. In the case of high temperature evaporation, protection against oxidation of the metal can be achieved by using a blanket gas such as nitrogen or an inert gas such as argon. Other methods such as sputtering can also be used to deposit the metal catalyst. In a variation of the method non-metallic catalysts can also be applied by vapour deposition methods such as chemical vapour deposition and electrostatic assisted vapour deposition. Other standard coating methods can also be used to apply the catalyst layers such as dip coating from a liquid suspension, wet spraying, electrostatic spraying, powder spraying, doctor-blading, screen printing, pad printing, any other coating technique that is commonly used to coat a substrate. In addition, some non-metallic electrocatalysts can be applied by electrochemical means from soluble precursors.

### Example 3 Making a gas diffusion layer for electrolysers

In this example a block of porous graphite foam is cut by conventional means into a sheet of thickness typically 1mm, but thinner or thicker electrodes can also be envisaged. The area of the sheet is similar to that of the overall dimension of the completed electrode assembly. The sheet is then impregnated with a thin hydrophilic layer of a substance such as PTFE using a variety of techniques including dip coating from a liquid suspension, wet spraying, electrostatic spraying, doctor-blading, screen printing, pad printing, vapour deposition, vacuum deposition and any other coating technique that is commonly used to apply PTFE and similar plastic materials to a substrate. The waterproofed graphite sheet is then ready to be bonded to the active layer.

### Example 4 Making an active anode layer for electrolysers from graphite foam using traditional catalysts

In this example a block of porous graphite foam is cut by conventional means into a sheet of thickness typically 1mm, but thinner or thicker electrodes can also be envisaged. The area of the sheet is similar to that of the overall dimension of the completed electrode assembly. The sheet is then impregnated with the active anode catalyst. Traditionally platinum supported on high surface area carbon is used as the anode catalyst. In this case such a catalyst can be applied using a variety of techniques including dip coating from a liquid suspension, wet spraying, electrostatic spraying, doctor-blading, screen printing, pad printing, vapour deposition, vacuum deposition and any other coating technique that is commonly used to coat a substrate.

### Example 5 Making an active cathode layer for electrolysers using traditional catalysts

In this example a block of porous graphite foam is cut by conventional means into a sheet of thickness typically 1mm, but thinner or thicker electrodes can also be envisaged. The area of the sheet is similar to that of the overall dimension of the completed electrode assembly. The sheet is then impregnated with the active cathode catalyst. Traditionally platinum supported on high surface area carbon is used as the cathode catalyst. In this case such a catalyst can be applied using a variety of techniques including dip coating from a liquid suspension, wet spraying, electrostatic spraying, doctor-blading, screen printing, pad printing, vapour deposition, vacuum deposition and any other coating technique that is commonly used to coat a substrate.

### Example 6 Making an active anode layer for electrolysers using novel catalysts

In this example a block of porous graphite foam is cut by conventional means into a sheet of thickness typically 1mm, but thinner or thicker electrodes can also be envisaged. The area of the sheet is similar to that of the overall dimension of the completed electrode assembly. The sheet is then impregnated with the active anode catalyst. In this example we use a novel catalyst which does not contain any platinum. Examples of alternative anode catalysts include nickel, Raney nickel, nickel alloys, borides and perovskite oxides. In this case such a catalyst can be applied using a variety of techniques including electrochemical deposition, electroless deposition, dip coating from a liquid suspension, wet spraying, electrostatic spraying, doctor-blading, screen printing, pad printing, vapour deposition, vacuum deposition and any other coating technique that is commonly used to coat a substrate. The active layer is ready to be bonded to the gas diffusion layer.

### Example 7 Making an active cathode layer for electrolysers using novel catalysts

In this example a block of porous graphite foam is cut by conventional means into a sheet of thickness typically 1mm, but thinner or thicker electrodes can also be envisaged. The area of the sheet is similar to that of the overall dimension of the completed electrode assembly. The sheet is then impregnated with the active cathode catalyst. In this example we use a novel catalyst which does not contain any platinum. Examples of alternative cathode catalysts include metallic silver, nickel, nickel alloys, borides and perovskite oxides. In this case such a catalyst can be applied using a variety of techniques including electrochemical deposition, electroless deposition, dip coating from a liquid suspension, wet spraying, electrostatic spraying, doctor-blading, screen printing, pad printing, vapour deposition, vacuum deposition and any other coating technique that is commonly used to coat a substrate. The active layer is ready to be bonded to the gas diffusion layer.

### Example 8 Making a combined gas diffusion layer and active anode or cathode layer for electrolysers

In this example a single sheet of porous graphite foam is used to make both the gas diffusion electrode and the active layer. This can be done by taking a sheet of porous graphite foam as explained in example 3. However, in this case the foam is first made hydrophobic by the PTFE treatment described in example 3, followed by impregnation of one side of the gas diffusion layer with the active catalyst. The method used to apply the catalyst is the same as those described in examples 2, 4, 5, 6 and 7. The completed gas diffusion layer and active anode layer is ready to be incorporated in the electrolyser.

### Example 9 Making a graded gas diffusion layer for electrolysers

In this example the fabrication process used to make the porous graphite foam is modified to provide a sheet of porous graphite foam with a graded porosity. On one side of the sheet there are coarse pores while on the other side of the sheet there are fine pores. In between the two sides, the porosity varies from coarse to fine. In operation, the coarse side of the sheet faces the bi-polar plate and the gas side of the fuel cell, while the fine side of the sheet faces the electrolyte side of the fuel cell. In order for this system to function, it is necessary to impart hydrophobic properties to the coarse side by impregnating the foam with PTFE or some other hydrophobic agent. On the fine side of the foam it is necessary to incorporate the catalyst. This can be done using coating techniques as described in examples 2, 4, 5, 6 and 7. In a variation of this application, the geometry is reversed and the coarse side of the foam is impregnated with the catalyst and faces the electrolyte side of the electrolyser while the fine side of the foam is made hydrophobic and faces the gas side of the electrolyser. The graded gas diffusion layer can be used on both the anode and the cathode sides of the electrolyser.

### Example 10 Making a complete anode assembly with a conventional gas diffusion layer for electrolysers

In this example the graphite foam based anode active layer as described in examples 4 and 6 is bonded to a conventional gas diffusion layer using calendaring and rolling techniques. In this case the gas diffusion layer is made from a stiff paste as described in other patents, which is first rolled into a thin sheet less than 1 mm thick using a calendaring machine. The anode active layer as described in examples 4 and 6 is then pressed onto one side of the rolled gas diffusion layer using applied pressure. This can be achieved by squeezing the two layers together in a calendaring machine, or alternatively squeezing the two layers together in a hydraulic uni-axial press, or a hydrostatic press. It is normally necessary to apply heat to this kind of gas diffusion layer to create the necessary porosity in the structure. To achieve this, the pressed assembly containing the foam is then heated in an oven to the desired temperature and duration. It may be necessary to purge the oven with an inert gas to avoid oxidation of the anode catalyst.

### Example 11 Making a complete cathode assembly with a conventional gas diffusion layer for electrolysers

In this example the graphite foam based cathode active layer as described in examples 5 and 7 is bonded to a conventional gas diffusion layer using calendaring and rolling techniques. In this case the gas diffusion layer is made from a stiff paste as described in other patents, which is first rolled into a thin sheet less than 1 mm thick using a calendaring machine. The cathode active layer as described in examples 5 and 7 is then pressed onto one side of the rolled gas diffusion layer using applied pressure. This can be achieved by squeezing the two layers together in a calendaring machine, or alternatively, squeezing the two layers together in a hydraulic uni-axial press, or a hydrostatic press. It is normally necessary to apply heat to this kind of gas diffusion layer to create the necessary porosity in the structure. To achieve this, the pressed assembly containing the foam is then heated in an oven to the desired temperature and duration. It may be necessary to purge the oven with an inert gas to avoid oxidation of the cathode catalyst.

### Example 12 Making an electrode assembly using a plurality of porous graphite foam tiles (window frame) for electrolysers

In this example the electrode is made up of smaller sub-units of porous graphite foam tiles which are assembled in a window frame made from a conducting plastic or polymer. The porous graphite foam tiles are cut in exactly the same manner as described in examples 1 and 2, the only difference is the size. The idea behind this application is to make much larger area electrodes from smaller stock sizes of porous graphite foam. This has the advantage of minimising the risk of breakage or damage to the graphite components and enabling the use of much thinner sheets of graphite. The window frame can be made by injection moulding methods using a conducting plastic or polymer. Alternatively other methods for making the window frame can be used. A suitable plastic material can be made by mixing graphite powder, such as the waste powder produced from cutting the porous graphite foam, with a thermosetting plastic. A suitable fabrication process for bonding the foam tile into the window frame is injection moulding. One key property of this type of electrode assembly is increased mechanical strength compared with an electrode made from a single sheet of porous graphite foam.

### Example 13 Incorporating a gas diffusion layer/active layer electrode assembly into a sub-frame for electrolysers

In order to use the gas diffusion layer/active layer electrode assembly in the electrolyser it is necessary to attach it to a sub-frame which acts as a housing for the electrode. The sub-frame is designed in such a way to provide gas and electrolyte feed channels, cooling channels (if required), sealing surfaces and locating fixtures. The sub-frame unit then becomes one of the basic repeat elements for constructing the stack. Other repeat elements containing the bi-polar plate are made in a similar fashion. One way to make the sub-frame is similar to that described in example 10. This employs the technique of injection moulding. This requires a thermosetting plastic material to be moulded around the electrode assembly which is inserted directly into the mould before injection. This provides a simple one step method for bonding the electrode and at the same time making a good edge seal around the periphery of the electrode. The use of porous graphite foams to make the electrode assemblies greatly improves this type of fabrication process as no metal mesh is required and the solid foam provides mechanical stability.

### Example 14 Supporting the gas diffusion layer and active layers with degradable backing films for electrolysers

In this example the thin layers of porous graphite foams can be more easily handled by bonding them to a backing film of degradable material such as rice paper or thermo-degradable gel. This intermediate step in the construction of the electrode assembly can minimise the risk of breakage or damage and allow larger electrode assemblies to be manufactured.

### Example 15 Making electrodes (anode or cathode) for electrolysers and fuel cells from a graphite cloth or graphite paper, incorporating an active layer

In this example a sheet of porous graphite cloth, or alternatively a sheet of porous graphite paper, is cut by conventional means into a sheet of thickness typically 1mm, but thinner or thicker electrodes can also be envisaged. The area of the sheet is similar to that of the overall dimension of the completed electrode assembly. The surfaces of the graphite cloth or paper are coated with an active catalytic material which increases the rate of electrochemical reactions on the electrodes. Methods used to apply a metallic catalyst layer to the surfaces of the foam include vacuum assisted vapour deposition, chemical vapour deposition, vapour deposition, evaporation, sputtering, electro-plating, electroless plating, spray coating, dip coating and any other technique that is commonly used to apply a metallic coating. Examples of catalytically active metals include silver, silver alloys, nickel, nickel alloys, cobalt, cobalt alloys, iron, iron alloys etc. The sheet is then incorporated into the electrode assembly where it functions as the electrode (anode or cathode). In a variation of the method non-metallic catalysts such as perovskites can also be applied by vapour deposition methods including chemical vapour deposition and electrostatic assisted vapour deposition. Other coating methods such as sputtering, laser ablation, VPS, spray pyrolysis and dip coating can also be used to apply catalysts.

The high surface area of the catalytically coated graphite foam provides a large number of active sites for the electrochemical reactions to take place. In the case of electrolysers, these reactions will be hydrogen evolution on the cathode and oxygen evolution on the anode. In the case of fuel cells, these reactions will be hydrogen oxidation on the anode and oxygen reduction on the cathode.

The sheet is then made into an electrode by coating the surfaces of the graphite cloth or paper with a layer of catalytic material. In particular the method of vapour deposition can be used to apply layers of metal and other materials as catalysts. Metals have the advantage of being readily vaporised, either by high temperature evaporation or vacuum assisted evaporation. In the case of high temperature evaporation, protection against oxidation of the metal can be achieved by using a blanket gas such as nitrogen or an inert gas such as argon. Other methods such as sputtering can also be used to deposit the metal catalyst. In a variation of the method, non-metallic catalysts can also be applied by vapour deposition methods such as chemical vapour deposition and electrostatic assisted vapour deposition. Other standard coating methods can also be used to apply the catalyst layers such as dip coating from a liquid suspension, wet spraying, electrostatic spraying, powder spraying, doctor-blading, screen printing, pad printing and any other coating technique that is commonly used to coat a substrate. In addition, some non-metallic electrocatalysts can be applied by electrochemical means from soluble precursors.

### Example 16 Making a gas diffusion layer for electrolysers and fuel cells from graphite cloth or graphite paper

In this example a sheet of porous graphite cloth, or alternatively a sheet of porous graphite paper, is cut by conventional means into a sheet of thickness typically 1mm, but thinner or thicker electrodes can also be envisaged. The area of the sheet is similar to that of the overall dimension of the completed electrode assembly. The sheet is then impregnated with a thin hydrophilic layer of a substance such as PTFE using a variety of techniques including dip coating from a liquid suspension, wet spraying, electrostatic spraying, doctor-blading, screen printing, pad printing, vapour deposition, vacuum deposition and any other coating technique that is commonly used to apply PTFE and similar plastic materials to a substrate.

### Example 17 Making an active anode layer for electrolysers and fuel cells from graphite cloth or graphite paper using traditional catalysts

In this example a sheet of porous graphite cloth, or alternatively a sheet of porous graphite paper, is cut by conventional means into a sheet of thickness typically 1mm, but thinner or thicker electrodes can also be envisaged. The area of the sheet is similar to that of the overall dimension of the completed electrode assembly. The sheet is then impregnated with the active anode catalyst. Traditionally platinum supported on high surface area carbon is used as the anode catalyst. In this case such a catalyst can be applied using a variety of techniques including dip coating from a liquid suspension, wet spraying, electrostatic spraying, doctor-blading, screen printing, pad printing, vapour deposition, vacuum deposition and any other coating technique that is commonly used to coat a substrate.

### Example 18 Making an active cathode layer for electrolysers and fuel cells from graphite cloth or graphite paper using traditional catalysts.

In this example a sheet of porous graphite cloth, or alternatively a sheet of porous graphite paper, is cut by conventional means into a sheet of thickness typically 1mm, but thinner or thicker electrodes can also be envisaged. The area of the sheet is similar to that of the overall dimension of the completed electrode assembly. The sheet is then impregnated with the active cathode catalyst. Traditionally platinum supported on high surface area carbon is used as the cathode catalyst. In this case such a catalyst can be applied using a variety of techniques including dip coating from a liquid suspension, wet spraying, electrostatic spraying, doctor-blading, screen printing, pad printing, vapour deposition, vacuum deposition and any other coating technique that is commonly used to coat a substrate.

### Example 19 Making an active anode layer for electrolysers and fuel cells using novel catalysts on graphite cloth or graphite paper

In this example a sheet of porous graphite cloth, or alternatively a sheet of porous graphite paper, is cut by conventional means into a sheet of thickness typically 1mm, but thinner or thicker electrodes can also be envisaged. The area of the sheet is similar to that of the overall dimension of the completed electrode assembly. The sheet is then impregnated with the active anode catalyst. In this example we use a novel catalyst which does not contain any platinum. Examples of alternative anode catalysts include nickel, Raney nickel, nickel alloys, borides and perovskite oxides In this case such a catalyst can be applied using a variety of techniques including electrochemical deposition, electroless deposition, dip coating from a liquid suspension, wet spraying, electrostatic spraying, doctor-blading, screen printing, pad printing, vapour deposition, vacuum deposition and any other coating technique that is commonly used to coat a substrate.

### Example 20 Making an active cathode layer for electrolysers and fuel cells using novel catalysts on graphite cloth or graphite paper

In this example a sheet of porous graphite cloth, or alternatively a sheet of porous graphite paper, is cut by conventional means into a sheet of thickness typically 1mm, but thinner or thicker electrodes can also be envisaged. The area of the sheet is similar to that of the overall dimension of the completed electrode assembly. The sheet is then impregnated with the active cathode catalyst. In this example we use a novel catalyst which does not contain any platinum. Examples of alternative cathode catalysts include metallic silver, nickel, nickel alloys, borides and perovskite oxides. In this case such a catalyst can be applied using a variety of techniques including electrochemical deposition, electroless deposition, dip coating from a liquid suspension, wet spraying, electrostatic spraying, doctor-blading, screen printing, pad printing, vapour deposition, vacuum deposition and any other coating technique that is commonly used to coat a substrate. The active layer is ready to be bonded to the gas diffusion layer.

### Example 21 Making a combined gas diffusion layer and active anode or cathode layer for electrolysers and fuel cells using graphite cloth or graphite paper

In this example a single sheet of porous graphite cloth or porous graphite paper is used to make both the gas diffusion electrode and the active layer. This can be done by taking a sheet of porous graphite cloth or porous graphite paper as explained in example 15. However, in this case the cloth or paper is first made hydrophobic by the PTFE treatment described in example 16, followed by impregnation of one side of the gas diffusion layer with the active catalyst. The method used to apply the catalyst is the same as those described in examples 15, 17, 18, 19 and 20. The completed gas diffusion layer and active anode layer is ready to be incorporated in the electrolyser or fuel cell.

### Example 22 Making a graded gas diffusion layer for electrolysers and fuel cells using graphite cloth or graphite paper

In this example the fabrication process used to make the porous graphite cloth or paper is modified to provide a sheet of porous graphite cloth or paper with a graded porosity. On one side of the sheet there are coarse pores while on the other side of the sheet there are fine pores. In between the two sides, the porosity varies from coarse to fine. In operation, the coarse side of the sheet faces the bi-polar plate and the gas side of the electrolyser or fuel cell, while the fine side of the sheet faces the electrolyte side of the electrolyser or fuel cell. In order for this system to function it is necessary to impart hydrophobic properties to the coarse side by impregnating the graphite sheet with PTFE or some other hydrophobic agent. On the fine side of the graphite sheet it is necessary to incorporate the catalyst. This can be done using coating techniques as described in examples 15, 17, 18, 19 and 20. In a variation of this application, the geometry is reversed and the coarse side of the graphite sheet is impregnated with the catalyst and faces the electrolyte side of the electrolyser or fuel cell while the fine side of the graphite sheet is made hydrophobic and faces the gas side of the electrolyser or fuel cell. The graded gas diffusion layer can be used on both the anode and the cathode sides of the electrolyser or fuel cell.

### Example 23 Making a complete anode assembly with a conventional gas diffusion layer for electrolysers and fuel cells using graphite cloth or graphite paper

In this example the anode active layer as described in examples 17 and 19 is bonded to a conventional gas diffusion layer using calendaring and rolling techniques. In this case the gas diffusion layer is made from a stiff paste as described in other patents, which is first rolled into a thin sheet less than 1 mm thick using a calendaring machine. The anode active layer as described in examples 17 and 19 is then pressed onto one side of the rolled gas diffusion layer using applied pressure. This can be achieved by squeezing the two layers together in a calendaring machine, or alternatively squeezing the two layers together in a hydraulic uni-axial press, or a hydrostatic press. It is normally necessary to apply heat to this kind of gas diffusion layer to create the necessary porosity in the structure. To achieve this, the pressed assembly is then heated in an oven to the desired temperature and duration. It may be necessary to purge the oven with an inert gas to avoid oxidation of the anode catalyst.

### Example 24 Making a complete cathode assembly with a conventional gas diffusion layer for electrolysers and fuel cells

In this example the cathode active layer as described in examples 18 and 20 is bonded to a conventional gas diffusion layer using calendaring and rolling techniques. In this case the gas diffusion layer is made from a stiff paste as described in other patents, which is first rolled into a thin sheet less than 1 mm thick using a calendaring machine. The cathode active layer as described in examples 18 and 20 is then pressed onto one side of the rolled gas diffusion layer using applied pressure. This can be achieved by squeezing the two layers together in a calendaring machine, or alternatively squeezing the two layers together in a hydraulic uni-axial press, or a hydrostatic press. It is normally necessary to apply heat to this kind of gas diffusion layer to create the necessary porosity in the structure. To achieve this, the pressed assembly is then heated in an oven to the desired temperature and duration. It may be necessary to purge the oven with an inert gas to avoid oxidation of the cathode catalyst.

### Example 25 Making a gas diffusion layer and active layer assembly using a plurality of porous graphite cloth or graphite paper tiles (window frame) for electrolysers and fuel cells

In this example the gas diffusion layer is made up of smaller sub-units of porous graphite cloth or paper tiles which are assembled in a window frame made from a conducting plastic or polymer. The porous graphite tiles are cut in exactly the same manner as described in example 15, the only difference is the size. The idea behind this application is to make much larger area electrodes from smaller stock sizes of porous graphite cloth or paper. This has the advantage of minimising the risk of breakage or damage of the graphite components and enabling much thinner sheets of graphite to be used. The window frame can be made by injection moulding methods using a conducting plastic or polymer. Alternatively other methods for making the window frame can be used. A suitable plastic material can be made by mixing graphite powder, such as the waste powder produced from cutting porous graphite foam, with a thermosetting plastic. A suitable fabrication process for bonding the graphite tiles into the window frame is injection moulding. One key property of this type of electrode assembly is increased mechanical strength compared with an electrode made from a single sheet of porous graphite cloth.

## Claims

1. Porous graphite foams have sufficient mechanical strength to make self supporting electrode assemblies which do not require the use of nickel mesh or other metallic support materials. The high strength means that there is less risk of mechanical breakdown during service life.

2. Porous graphite foams have sufficient electrical conductivity to make the use of nickel mesh or other metallic current collectors unnecessary. Moreover, graphite has a higher electronic conductivity than the non-graphitic forms of carbon. This means that electrolyser components using graphite instead of carbon can have lower electrical resistances. This will enable stacks to be manufactured with lower Ohmic losses and therefore operate with higher electrical efficiencies.

3. Porous graphite foams have sufficient thermal conductivity to simplify and improve the heat management in fuel cells and to provide a more uniform heat distribution over the active area of the electrode. This in turn means that there is less risk of thermal hot spots being generated under operating conditions, which means that less degradation will take place in the electrolyser and consequently increase lifetime, durability and reliability. Moreover this means that the electrolyser can be run at higher current densities.

4. Porous graphite foams have a much lower thermal expansion coefficient than metals such as nickel. So by replacing the metal with the graphite foam means that less stress will be built up inside the cell during operation, especially during thermal cycling. This in turn will reduce the risk of plate warping and degradation due to thermal expansion.

5. Porous graphite foams have very low creep rates which means that the electrode assemblies will be dimensionally stable over very long periods of time. This will lead to prolonged lifetime of operation with lower degradation rates.

6. Porous graphite foams are corrosion resistant towards the aggressive alkali used in the electrolyte. This means that there will be less decomposition of the electrode assemblies that would otherwise have existed with carbon paste gas diffusion layers and carbon paste active layers. It is known that carbon electrodes can disintegrate with time under such aggressive conditions. The use of graphite instead of carbon will greatly reduce this disintegration phenomenon.

7. Electrode assemblies made with porous graphite foams are electrically conducting throughout and so can be used in a bi-polar electrolyser stack. This is a major advantage over conventional alkaline electrode assemblies which generally have an insulating gas diffusion layer rendering the bi-polar systems inappropriate.

8. The use of porous graphite foam in the construction of electrode assemblies simplifies the overall construction of the electrolyser, requiring fewer steps and shorter fabrication times. This in turn leads to cost saving and cheaper fuel cells.

9. The cost of fabricating the porous graphite foam is less than other carbon preparation routes and coupled with ease of machinability and general shaping imparts a cost saving to the fabrication of electrolysers incorporating the porous graphite foam.

10. Porous graphite foams are not completely rigid, but do possess a degree of flexibility which enables some bending to occur in service. Likewise the same material is also relatively soft which means that it is slightly compressible. These two properties provide a degree of compliance which allows the material to make very good electrical, thermal and mechanical contact with adjacent components in the stack. This means that when the stack elements are compressed together, the contact area between the foam components is maximized.

11. The porous graphite foam can also be used in the electrolyser in its powder form. One convenient source of this powder is the left over waste from the sheet and tile cutting process. Using this powder maximizes the cost effectiveness of the overall graphite manufacturing process as well as imparting preferential properties to the electrolyser application such as improved electronic and mechanical properties.

12. The idea of using graphite can be extended to include graphitized carbon cloth, graphitized carbon paper and graphitized carbon felt. This is relevant to any fuel cell type which uses carbon cloth or carbon paper as the main component of the gas diffusion layer and active layer. Such fuel cells include specifically the alkaline fuel cell, the PEM fuel cell and the direct methanol fuel cell. Graphitizing the carbon cloth of carbon paper will increase the electronic conductivity and the corrosion resistance/degradation. This latter aspect particularly relates to the problem of electrode disintegration under high current densities and also oxidation by air and peroxides.

13. The graphitized foam can easily be coated with a catalyst and other layers by any of the methods normally used to coat a substrate. These methods include vacuum deposition, sputtering deposition and evaporation deposition at an elevated temperature above the melting point of the coating material. Other methods include electroplating, electroless deposition, dip coating from a liquid suspension, wet spraying, electrostatic spraying, doctor-blading, screen printing, pad printing and other coating methods.

14. Porous graphite cloth and paper have sufficient mechanical strength to make self supporting electrode assemblies which do not require the use of nickel mesh or other metallic support materials. The high strength means that there is less risk of mechanical breakdown during service life.

15. Porous graphite cloth and paper have sufficient electrical conductivity to make the use of nickel mesh or other metallic current collectors unnecessary. Moreover, graphite has a higher electronic conductivity than the non-graphitic forms of carbon. This means that fuel cell components using graphite instead of carbon can have lower electrical resistances. This will enable stacks to be manufactured with lower Ohmic losses and therefore operate with higher electrical efficiencies.

16. Porous graphite cloth and paper have sufficient thermal conductivity to simplify and improve the heat management in fuel cells and to provide a more uniform heat distribution over the active area of the electrode. This in turn means that there is less risk of thermal hot spots being generated under operating conditions, which means that less degradation will take place in the fuel cell and consequently increase lifetime, durability and reliability. This will allow the fuel cell to be run at higher current densities.

17. Porous graphite cloth and paper have a much lower thermal expansion coefficient than metal such as nickel. By replacing the metal with the graphite foam, less stress will be built up inside the cell during operation, especially during thermal cycling. This in turn will reduce the risk of plate warping and degradation due to thermal expansion.

18. Porous graphite cloth and paper have very low creep rates, therefore the electrode assemblies will be dimensionally stable over very long periods of time. This will lead to prolonged lifetime of operation with lower degradation rates.

19. Porous graphite cloth and paper are corrosion resistant towards the aggressive alkali used in the electrolyte, so there will be less decomposition of the electrode assemblies that would otherwise have existed with carbon paste gas diffusion layers and carbon paste active layers. It is known that carbon electrodes can disintegrate with time under such aggressive conditions. The use of graphite instead of carbon will greatly reduce this disintegration phenomenon.

20. Electrode assemblies made with porous graphite cloth and paper are electrically conducting throughout and so they can be used in a bi-polar fuel cell stacks and bi-polar electrolyser stacks. This is a major advantage over conventional alkaline electrode assemblies which generally have an insulating gas diffusion layer rendering the bi-polar systems inappropriate.

21. The use of porous graphite cloth and paper in the construction of electrode assemblies simplifies the overall construction of the fuel cell and electrolyser, requiring fewer steps and shorter fabrication times. This in turn leads to cost saving and cheaper fuel cells.

22. The cost of fabricating the porous graphite cloth and paper is less than other carbon preparation routes and coupled with ease of machinability and general shaping imparts a cost saving to the fabrication of fuel cells and electrolysers incorporating the porous graphite cloth and paper.

23. Porous graphite cloth and paper are not rigid, but do possess a degree of flexibility which enables some bending to occur in service. Likewise the same material is also relatively soft which means that it is slightly compressible. These two properties provide a degree of compliance which allows the material to make very good electrical, thermal and mechanical contact with adjacent components in the stack. This means that when the stack elements are compressed together, the contact area between the foam components is maximized.

24. The graphitized carbon cloth and paper can easily be coated with a catalyst and other layers by any of the methods normally used to coat a substrate. These methods include vacuum deposition, sputtering deposition and evaporation deposition at elevated temperature above the melting point of the coating material. Other methods include electroplating, electroless deposition, dip coating from a liquid suspension, wet spraying, electrostatic spraying, doctor-blading, screen printing, pad printing and other coating methods.
